(19) **Europäisches Patentamt / European Patent Office / Office européen des brevets**

(11) **EP 1 738 376 B1**

(12) **EUROPÄISCHE PATENTSCHRIFT**

(45) Veröffentlichungstag und Bekanntmachung des Hinweises auf die Patenterteilung:
**27.10.2010 Patentblatt 2010/43**

(21) Anmeldenummer: 05739762.2

(22) Anmeldetag: **22.04.2005**

(51) Int Cl.:
**H01B 12/12** $^{(2006.01)}$    **H01B 12/10** $^{(2006.01)}$

(86) Internationale Anmeldenummer:
**PCT/EP2005/004420**

(87) Internationale Veröffentlichungsnummer:
**WO 2005/104143 (03.11.2005 Gazette 2005/44)**

(54) **SUPRALEITENDES KABEL UND VERFAHREN ZUR HERSTELLUNG DESSELBEN**

SUPRACONDUCTIVE CABLE AND METHOD FOR THE PRODUCTION THEREOF

CABLE SUPRACONDUCTEUR ET SON PROCEDE DE PRODUCTION

(84) Benannte Vertragsstaaten:
**AT BE BG CH CY CZ DE DK EE ES FI FR GB GR HU IE IS IT LI LT LU MC NL PL PT RO SE SI SK TR**
Benannte Erstreckungsstaaten:
**YU**

(30) Priorität: **23.04.2004 EP 04009730**

(43) Veröffentlichungstag der Anmeldung:
**03.01.2007 Patentblatt 2007/01**

(73) Patentinhaber: **GSI Helmholtzzentrum für Schwerionenforschung GmbH 64291 Darmstadt (DE)**

(72) Erfinder:
• **FISCHER, Egbert 64291 Darmstadt (DE)**
• **KHODGHIBAGIYAN, Hamlet 141980 Dubna, Moscow Region (RU)**
• **KOVALENKO, Alexander 141980 Dubna, Moscow Region (RU)**
• **MORITZ, Gebhard 64291 Darmstadt (DE)**

(74) Vertreter: **Forstmeyer, Dietmar et al BOETERS & LIECK Oberanger 32 80331 München (DE)**

(56) Entgegenhaltungen:
**US-A- 3 623 221**    **US-A- 4 327 244**
**US-A1- 2003 024 730**

• **KHODZIBAJIYAN ET AL.: "Design of new hollow Superconducting NbTi cables" IEEE TRANSACTIONS ON APPLIED SUPERCONDUCTIVITY, Bd. 13, Nr. 2, 30. Juni 2003 (2003-06-30), Seiten 3370-3373, XP008035534 in der Anmeldung erwähnt**

**Beschreibung**

Die Erfindung betrifft ein supraleitendes Hohlkabel mit einem Außentubus, der einen kreisförmigen Innenquerschnitt und damit eine zylindrische Innenwand aufweist. Darüber hinaus hat das supraleitende Hohlkabel einen zentralen Kühlkanal mit kreisförmigem Querschnitt, der kleiner ist als der Innenquerschnitt des Außentubus. Zwischen der Innenwand des Außentubus und dem Kühlkanal sind profilierte supraleitende Drähte angeordnet. Derartige profilierte supraleitende Drähte weisen mindestens einen Supraleiter (supraleitendes Filament) auf und haben ein Querschnittsprofil eines Schlusssteines, bzw. Keystones, wie er für römische Steinbrücken oder für Kreuzgewölbe bekannt ist.

Profilierte supraleitende Kabel mit einem Querschnittsprofil eines Schlusssteines sind aus der Druckschrift US 6,675,623 B2 bekannt. Stand der Technik ist ferner US 2003/0024 730. Die bekannten schlusssteinförmigen supraleitenden Kabel bestehen aus supraleitenden, miteinander verseilten Drähten mit rundem Querschnitt, und haben nach dem Verseilen mithilfe von Profilwalzen eine trapezförmige Form erhalten.

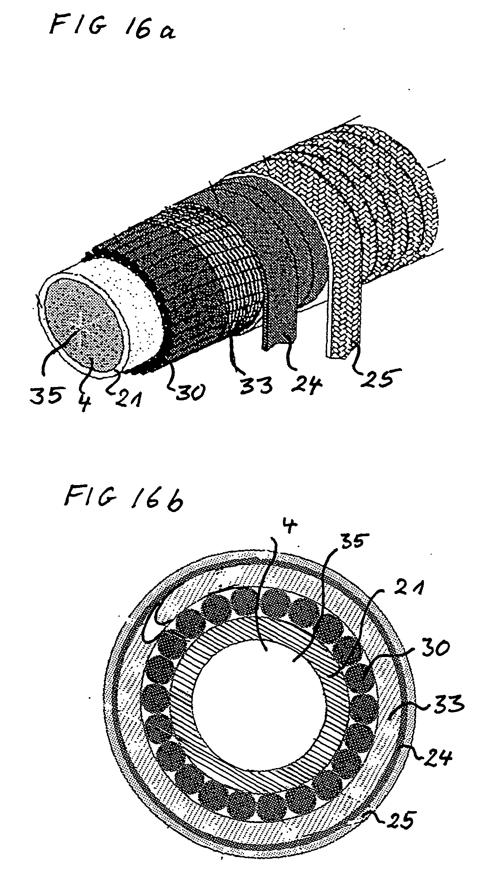

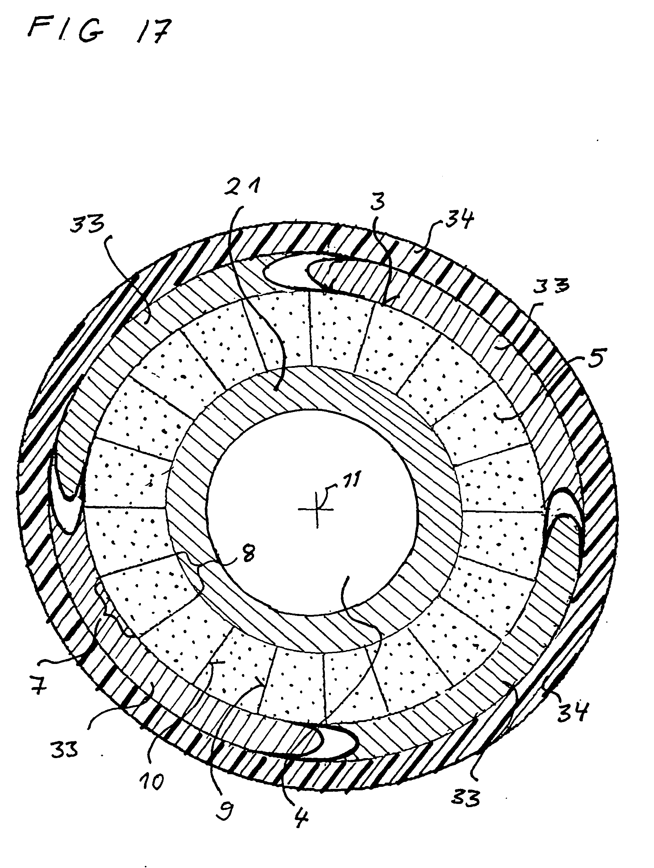

Der Aufbau eines supraleitenden Hohlkabels vom Nuklotron-Typ mit runden (Standartvariante, Figur 16) oder profilierten supraleitenden Drähten (verbessertes Nuklotron-Kabel, Figur 17) ist aus der Druckschrift "Design and test of new hollow high current NbTi cable for fast ramped synchrotron magnets" Proc. EUCAS 2003, Sorrento, September 2003, H. Khodzhibagiyan et al. bekannt. Bei dem bekannten Hohlkabel wird zunächst ein Kühlkanal dadurch gebildet, dass ein kompakter metallischer Innentubus aus CuNi bereitgestellt wird. Auf dessen Außenmantel sind in Längsrichtung profilierte supraleitende Drähte mit einem schlusssteinförmigen Querschnitt aufgelegt bzw. gewickelt. Um die supraleitenden Drähte auf dem kompakten Innentubus zu fixieren, sind NiCr-Drähte außen um die supraleitende Drähte radial bzw. schraubenförmig gewickelt. Ein Kapton-Band, das über die NiCr-Drähte gewickelt ist, bildet einen schützenden Außenmantel. Ein auf den Außenmantel gewickeltes Glasfaserband sorgt für die elektrische Isolation des supraleitenden Hohlkabels.

Ein derart aufgebautes supraleitendes Hohlkabel hat u.a. den Vorteil hohe dynamische Belastungen kompensieren zu können, wie sie durch die Lorentzkräfte in schnellgepulsten Magneten und hohen Magnetfeldern entstehen. Die durch diese Wechselfelder über Wirbelströme, Hysteresezyklen, mechanische Spannungsfelder und weitere, äußere Einflüsse (z.B. Ionenstrahlen) verursachte Wärmequellen können im Dauerbetrieb über den inneren Kühlkanal wegen des kompakten Innentubus sehr effektiv gekühlt werden. Der relativ große Querschnitt des kompakten Innentubus mit glatter Oberfläche ermöglicht einen hohen Kühlmitteldurchsatz bei geringem Reibungswiderstand und somit niedrigem Druckgefälle im zweiphasigen Heliumstrom. Zudem sind alle supraleitenden Drähte absolut symmetrisch angeordnet und somit unter identischen Betriebsbedingungen, wodurch eine Degradationdes kritischen Stroms des Kabels mit steigender elektromagnetischer Belastung weitestgehend verhindert wird.

Diese Anordnung der supraleitenden Drähte führt weiterhin zu einer geringen Induktivität des Kabels und damit (u.a.) auch zu einer Verringerung der gespeicherten Energie.

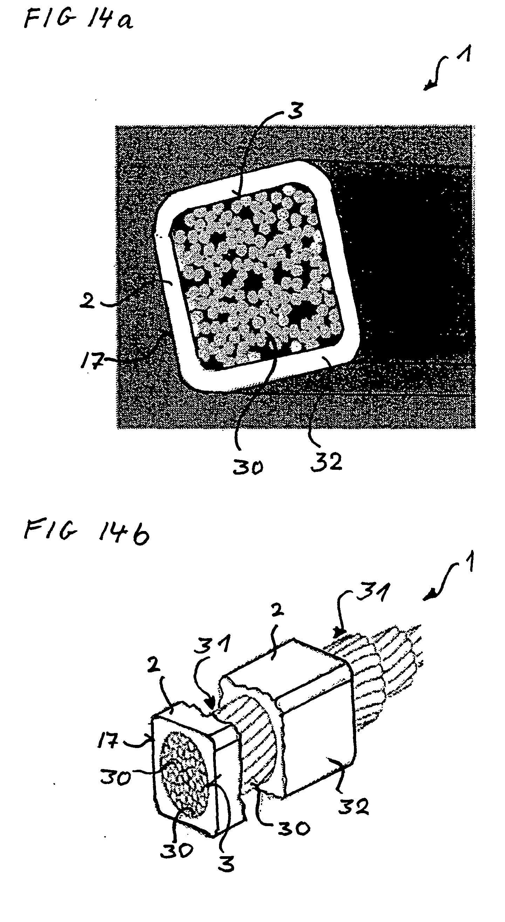

Ein anderer Kabeltyp wird in der Regel bevorzugt, wenn das zu erstellende Spulensystem nicht in extrem schnellgepulsten Regime betrieben werden soll, dafür aber eine hohe induktive Energie zu speichern hat, die in kurzzeitigen hohen und stochastistischen Wärmeimpulsen abgegeben werden muß. In diesem Fall ist eine kontinuierliche hohe Kühlleistung sekundär, während der schnellstmögliche Wärmeübertrag an die Wärmekapazität des die supraleitenden Drähte kühlende Heliums im Millisekundenbereich primär angestrebt wird. Für diese Aufgabe wurden die bekannten Hohlkabel vom CICC-Typ entwickelt wie sie Figur 14 zeigt.

Da in der praktischen Anwendung diese Kabel jedoch zunehmend auch höhere mechanische und thermische Belastungen beherrschen müssen führte deren Weiterentwicklung zu einem Hochstromkabel vom CICC-Typ das durch zusätzliche Konstruktionselemente und eine komplizierte Kühlung mit zwei prinzipiell unterschiedlichen Kühlkreisläufen mit superkritischem Helium im äußeren Kühlkreislauf und mit zweiphasigem Helium im zentralen Kühlkanal verfügt.

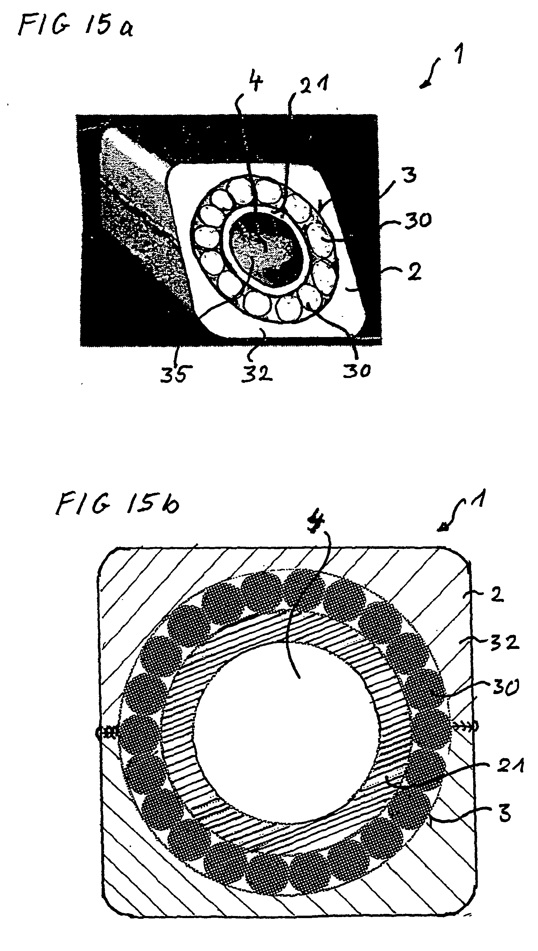

Dieser komplizierte Aufbau hat nicht nur technologische und damit kostenrelevante Nachteile sondern bedingt automatisch eine verringerte mittlere Stromdichte des Hohlkabels. Ein derartiges Kabel nach dem aktuellen Stand der Technik ist in Figur 15 dargestellt und als POLO-Kabel bekannt(siehe z.B."CHATS", FzK, Karlsruhe, September 2002, L. Bottura et al.). Es stellt den Prototyp für die im weiteren erläuterte Erfindung dar.

Aufgabe der Erfindung ist es, die Nachteile im Stand der Technik zu überwinden und ein supraleitendes Hohlkabel anzugeben, das eine intensive Kühlung der supraleitenden Komponenten ermöglicht und darüber hinaus eine hohe Stromdichte für ein Hohlkabel des CICC-Typs bei kompaktem und mechanisch stabilem Aufbau des Hohlkabels zur Verfügung stellt. Es sollen Lösungen angegeben werden, wie die Nachteile des CICC-Kabels gegenüber dem Kabel vom Nuklotron-Typ weitestgehend überwunden und die Vorteile beider Hohlkabeltypen in einem neuen supraleitendem Hohlkabel möglichst werden können.

Diese Aufgabe wird mit dem Gegenstand der unabhängigen Ansprüche gelöst. Vorteilhafte Weiterbildungen ergeben sich aus den abhängigen Ansprüchen.

Erfindungsgemäß wird ein Hohlkabel geschaffen, das einen Außentubus mit einem kreisförmigen Innenquerschnitt und zylindrischer Innenwand aufweist. Im Zentrum des supraleitenden Hohlkabels ist ein zentraler Kühlkanal mit polygonalem oder kreisförmigem Querschnitt angeordnet, der kleiner ist als der Innenquerschnitt des Außentubus. Zwischen der Innenwand und dem Kühlkanal sind profilierte supraleitende Drähte angeordnet. Diese profilierten supraleitende Drähte weisen mindestens ein supraleitendes Filament (gewöhnlich in einer Cu-Matrix)auf. Ferner haben die supraleitende Drähte ein Querschnittsprofil eines Schlusssteines, bzw. Keystones.

Das Querschnittsprofil der profilierten supraleitende Drähte weist einen äußeren Krümmungsabschnitt auf, der dem kreisförmigen Innenquerschnitt des Außentubus angepasst ist. Ferner weist der Querschnitt der profilierten supraleitende Drähte einen inneren Krümmungsabschnitt auf, der wiederum dem kreisförmigen Querschnitt des Kühlkanals angepasst ist. Schließlich besitzt das Querschnittsprofil Seitenkanten, die profiliert auf den Mittelpunkt des Kühlkanals ausgerichtet sind. Dabei sind die profilierten supraleitende Drähte auf der Innenwand des Außentubus angeordnet und bilden mit ihren inneren Abschnitten den Kühlkanal des supraleitenden Hohlkabels.

Zusammenfassend ist festzustellen, daß das supraleitende Kabel drei Hauptelemente aufweist, die nachfolgende Vorteile aufweisen. Zum ersten sind die supraleitenden Filamente minimisiert, wodurch der Meißner-Effekt und die Wechselstromverluste vermindert werden. Zum zweiten werden eine möglichst große Anzahl von Filamenten in eine metallische Matrix eingebettet, welche die Filimante mechanisch stabilisiert und eine hohe Wärmeleitung gewährleistet. Zum dritten wird in dem supraleitenden Kabel eine Anzahl supraleitender Drähte kombiniert und mechanisch stabilisiert und der Kontakt zum Kühlmittel realisiert. Elektrisch voneinander isoliert bilden die erfindungsgemäßen supraleitenden Drähte mit Widerstandsbarriere das Rohmaterial zur Herstellung konkreter Spulenelemente. Da die Drähte nicht miteinander verschmolzen sind, sind die Spulen und/oder Kabel äußerst fexibel.

Ein derartiges erfindungsgemäßes supraleitendes Hohlkabel hat u.a. folgende Vorteile:

Die profilierten supraleitenden Drähte sind derart dicht aneinander angeordnet und an die Innenwand des Außentubus angepasst, dass sie sich ohne den aus dem Stand der Technik bekannten Innentubus formschlüssig und kraftschlüssig in Position halten können und einen zylindrischen Körper ergeben, dessen Innenraum den Kühlkanal bildet. D.h. es werden keine inneren Konstruktionselemente mehr zur mechanischen Fixierung der supraleitenden Drähte benötigt. Neben der Materialersparnis durch Wegfall einer Komponente, hat dieses supraleitende Hohlkabel darüber hinaus den Vorteil, dass durch den grösseren Querschnitt des Kühlkanals der Strömungswiderstand für das Kühlmedium vermindert ist. Somit kann eine höhere Wirkung erreicht werden. Alternativ kann dieses zusätzliche freie Volumen auch für größere supraleitende Drähte und damit für eine höhere mittlere Stromdichte genutzt werden.

Schließlich steht das Kühlmedium, bzw. der Kühlkanal, unmittelbar mit den profilierten supraleitenden Drähten in Kontakt. Dieser Kontakt ist zwar auch bei den oben beschriebenen CICC-Kabeln gegeben, jedoch ist der Strömungswiderstand in den dortigen Kühladern beträchtlich, die Wärmekapazität der geringen Menge superkritischen Heliums begrenzt, sodass die mit dem erfindungsgemäßen Hohlkabel erreichbaren Kühlwirkungen in allen Zeitintervallen (kurze Wärmeimpulse und Dauerbelastung) deutlich größer sind. Die symmetrische Anordnung aller supraleitenden Drähte gewährleistet eine zusätzliche Stabilität des Gesamtkabels gegen thermische Impulse, wie oben für das Nuklotronkabel beschrieben. Aus kryotechnischer Sicht stellt die nunmehr drastisch vereinfachte Kühlung im Vergleich zum Prototyp einen entscheidenden Vorteil dar, da hiermit nicht mehr zwei, zumal auch noch qualitativ unterschiedliche Kühlkreislauefe benötigt werden und die Kühlleitungen in allen Zeitskalen (Impulsleistungen bis konstante Dauerleistung)um Größenordnungen verbessert ist.

Die profilierten supraleitenden Drähte sind derart dicht auf der Innenwand des Außentubus des supraleitenden Hohlkabels mit ihren äußeren Krümmungsabschnitten und ihren radial ausgerichteten Seitenkanten aneinander anstoßend angeordnet, dass sie bei allen Betriebstemperaturen des supraleitenden Hohlkabels einen zentralen Kühlkanals mit ihren inneren Krümmungsabschnitten aufrechterhalten. Da ein derartiges supraleitendes Hohlkabel extreme Temperaturdifferenzen von Raumtemperatur bis zu wenigen Grad Kelvin in seinem Betrieb durchläuft, wird durch den dichten Aufbau der schlusssteinförmigen profilierten supraleitenden Drähte erreicht, dass trotz der unterschiedlichen Betriebstemperaturen der zentrale Kühlkanal aufrechterhalten bleibt. Dazu ist die Summe von Spaltbreiten, die sich möglicherweise während des Betriebs zwischen den profilierten Supraleitungen bilden, bei allen Betriebstemperaturen des supraleitenden Hohlkabels kleiner als die Längendifferenz $\Delta l$ zwischen dem äußeren und dem inneren Krümmungsabschnitt einer einzelnen profilierten Supraleitung. Dabei ist

$$\Delta l = 2\pi(r_a - r_i)/n,$$

wobei n die Anzahl der auf der Innenwand des Außentubus verteilten profilierten Supraleitungen, $r_a$ der Innenradius des Außentubus und $r_i$ der Innenradius des Strömungskanals ist. Da die Länge $l_{ak}$ eines äußeren Krümmungsradius

$$l_{ak} = 2\pi r_a/n$$

beträgt und die Länge $1_{ik}$ des inneren Krümmungsabschnittes einer profilierten Supraleitung

$$1_{ik} = 2\pi r_i/m$$

ist, müssen bei allen Betriebstemperaturen des supraleitenden Hohlkabels die nachfolgenden Bedingungen erfüllt sein:

$$n \cdot s < \Delta l$$

oder

$$n \cdot s < l_{ak} - l_{ik},$$

und somit ist die Bedingung

$$s < 2\pi (r_a - r_i)/n^2.$$

zu gewährleisten, damit der zentrale Kühlkanal aufrechterhalten bleibt. Demnach ist die Anzahl der profilierten supraleitenden Drähte von der Fertigungstoleranz abhängig und muss ggf. so gering wie möglich gehalten halten werden, um bei großen Toleranzen die resultierende Spaltbreite s zulassen zu können. Generell sollten zur Verringerung des Einflusses der Wirbelströme die beiden Hauptmaße des Querschnitts der profilierten supraleitenden Drähte nicht zu stark voneinander abweichen. Die ebenso ungewünschte Wärmeproduktion aufgrund mechanischer Spannungs- und Deformationsfelder kann durch formschlüssige Fertigung, ggf. unter Vorspannung, minimiert werden.

In einer weiteren Ausführungsform der Erfindung weisen die profilierten supraleitenden Drähte ineinander greifende profilierte Seitenkanten auf. Während die obigen Betrachtungen für das Bilden eines zentralen Kühlkanals aus profilierten Supraleitungen mit geradlinigen auf die Mitte des Hohlkabels zulaufenden Seitenkanten des Querschnitts der profilierten Supraleitungen vorgesehen und abgeleitet sind, ist mit dieser weiteren Ausführungsform der Erfindung, bei der auch die Seitenkanten profiliert werden und nicht geradlinig zum Mittelpunkt verlaufen, eine weitere Möglichkeit gegeben, die Sicherheit zur Beibehaltung des zentralen Kühlkanals zu erhöhen. Zumal zusätzlich zu der oben erwähnten Längendifferenz $\Delta l$ für die Summe s·n aller Spaltbreiten s nun noch der Versatz durch die profilierten Seitenkanten hinzu kommt. Durch diesen Versatz mit einer Größe v ergibt sich als Bedingung für die zulässige Spaltbreite s der Wert

$$s < (\Delta l + v)/n.$$

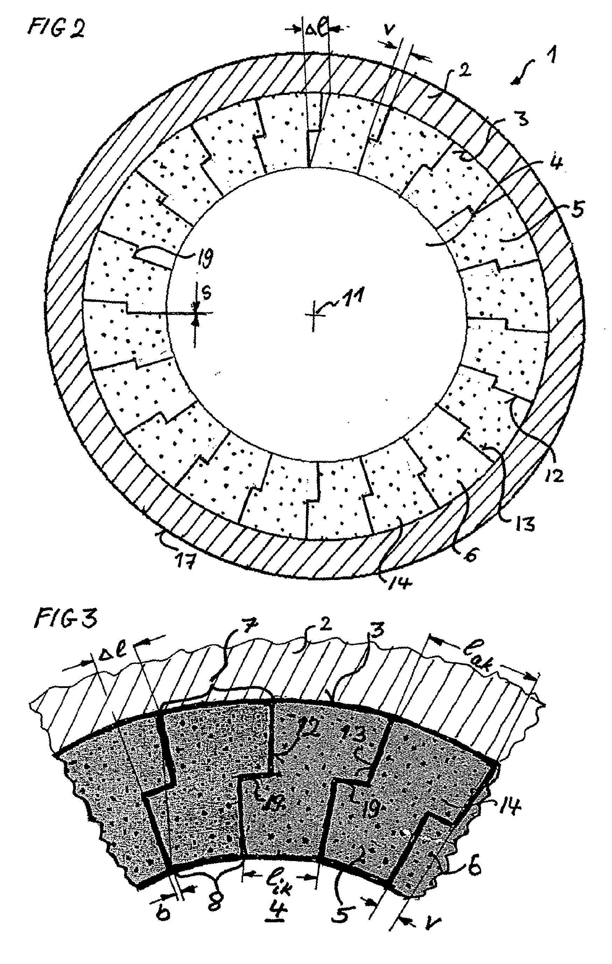

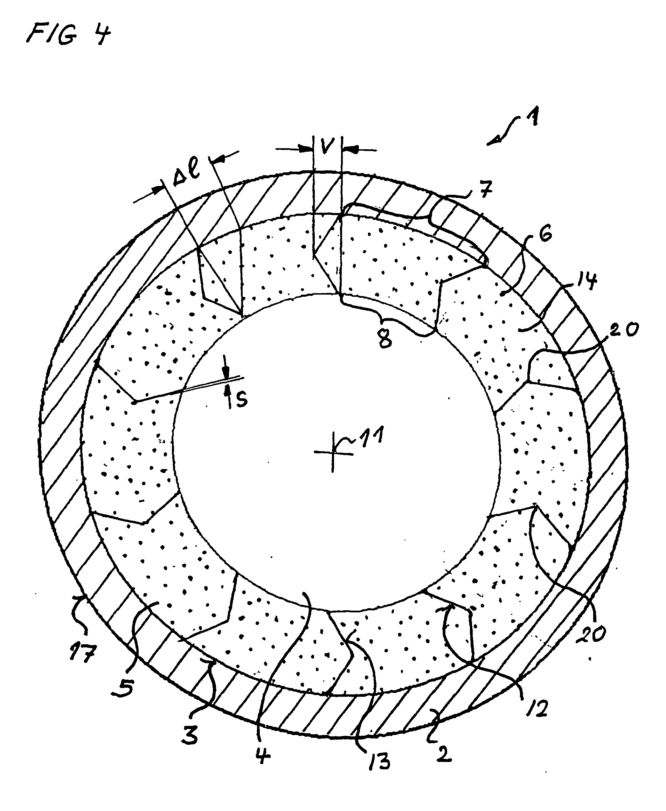

Mit den beigefügten Figuren 2 und 4 werden zwei Ausführungsformen für profilierte Supraleitungen mit profilierten Seitenkanten und dem jeweiligen Versatz der Größe v dargestellt.

In einer weiteren Ausführungsform der Erfindung ist der Außentubus zweilagig. Eine erste Lage weist einen oder mehrere schraubenförmig um eine Bündel supraleitender profilierter Drähte gewickelte Spanndrähte auf. Eine zweite Lage weist eine elektrisch isolierende und hermetisch abdichtende Außenschicht auf. Diese Spanndrahtlösung hat den Vorteil, dass beliebig lange supraleitende Hohlkabel kontinuierlich hergestellt werden können.

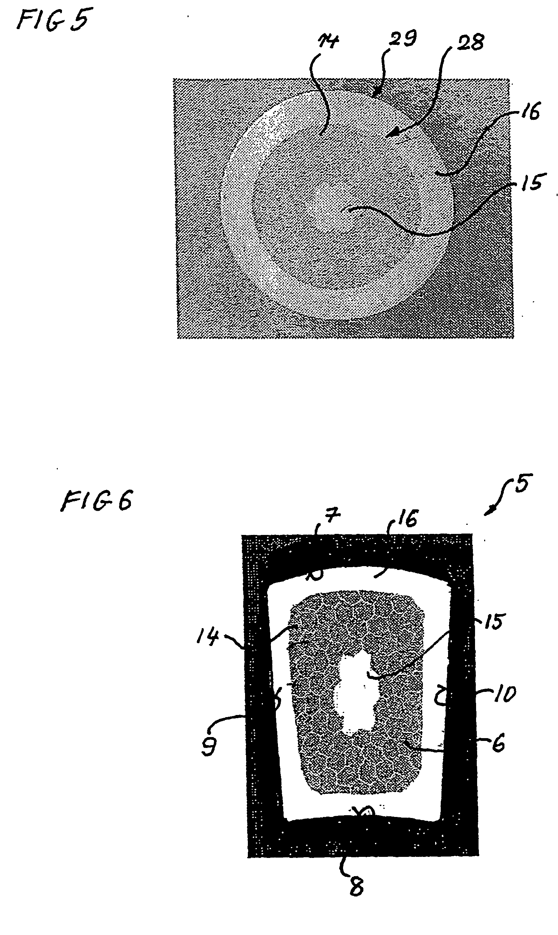

In einer weiteren Ausführungsform der Erfindung weisen die profilierten supraleitenden Drähte verseilte oder verdrillte supraleitende Filamente auf. Ausführungsbeispiele derartiger profilierter supraleitenden Drähte sind in den weiteren Figuren 6, 7 sowie 8 dargestellt und werden später erläutert. Die supraleitenden Filamente sind mit einem duktilen metallischen Kern und einem duktilen metallischen Mantel versehen so dass die supraleitenden Drähte einer profilierenden Formgebung zugänglich sind. Dazu weisen die profilierten supraleitenden Drähte eine metallische Matrix auf (mit einem metallischen Kern oder metallischen Seele, gewöhnlich aus Cu) und, zur Reduzierung von Wirbelströmen, ggf. zusätzliche hochresistive Zwischenschichten, z.B. aus CuNi-Legierungen. Die supraleitenden Filamente bestehen z.B. aus NbTi-Drähten, die miteinander verdrillt oder verseilt sind. Der Mantel weist ebenfalls vorzugsweise eine CuNi-Legierung auf.

In einer weiteren Ausführungsform der Erfindung sind die profilierten supraleitenden Drähte keramische oder HochtemperaturSupraleiter. Derartige HTSL haben den Vorteil, dass ihre kritische Temperatur wesentlich höher ist als bei metallischen Supraleitern. Die kritische Temperatur bei metallischen Supraleitern liegt unterhalb von 20 Grad Kelvin. Bei den HTSL liegen die kritischen Temperaturen teilweise oberhalb von 80 Grad Kelvin , womit der Vorteil verbunden ist, dass wesentlich preiswertere Kühlmittel eingesetzt werden können oder höhere Magnetfelder bei tieferen Temperaturen realisiert werden können. Wenn auch die Verarbeitung von HTSL zu profilierten supraleitenden Drähten schwieriger ist, so ist dennoch abzusehen, dass die so genannten YBCO basierenden keramischen Supraleitern auf der Basis von $Y_3O_3$, $BaCO_3$ und $CuO$ mit Beimischungen von Silberoxid, Platinoxid oder Ceriumoxid durchaus über entsprechende Schmelz- und Glühprozesse zu profilierten supraleitenden Drähten bearbeitet werden können. Auch die so genannten BSCCO-Supraleiter, die aus Wismut-, Strontium-, Kalzium- und Kupferoxiden bestehen und Zugaben von Bleioxiden enthalten können, weisen bis zu 90% supraleitendes orthorhombisches Material auf, das zu profilierten supraleitenden Drähten verarbeitet werden kann.

Der Außentubus des supraleitenden Hohlkabels ist aus einem metallischen oder nichtmetallischen Material, wie einer CuNi-Legierung,Edelstahl, GFK oder organischem Material aufgebaut und kann eine kreisförmige, quadratische oder trapezförmige Außenkontur, oder eine beliebige andere benötigte Form aufweisen. Der jeweilige Außentubus kann mit entsprechenden Kapton-Bändern und/oder Glasfaserbändern zur elektrischen Isolation umwickelt werden. Die quadratische Außenkontur hat den Vorteil, dass innerhalb des Außentubus in Längsrichtung Kühlkanäle eingebaut werden können, sodass die profilierten schlusssteinförmigen supraleitenden Drähte nicht nur durch den zentralen Kühlkanal, der unmittelbar in Kontakt mit den Supraleitungen steht, gekühlt werden, sondern zusätzlich auch noch durch den Außentubus, bzw. durch den Außentubus in Längsrichtung führende Kühlkanäle zusätzlich gekühlt werden kann. Das Gleiche gilt auch für trapezförmige Außenkonturen, da auch hier beispielsweise vier zusätzliche Kühlkanäle direkt im Außentubusmaterial vorgesehen werden können.

Die äußeren Kühlkanäle können längs der Innenwand des Außentubus über eine endliche Breite ~ $l_{ak}$ offen sein.

Die verdrillten profilierten supraleitenden Drähte kreuzen diese Kanäle unter einem nicht zu spitzen Winkel und werden somit nach jeder Vierteldrehung des Schraubenversatzes zusätzlich im direkten Kontakt mit dem Kühlmittel von außen gekühlt.

Somit befinden sich auch in dieser Variante alle Drähte in absolut identischen elektromagnetischen, mechanischen und thermischen Bedingungen.

Je nach Herstellungstechnologie (ohne oder mit mechanischer Vorspannung) und Einsatzbedingung ist es möglich, als Material für den Außentubus ein Material vorzusehen, das einen größeren oder kleineren thermischen Ausdehnungskoeffizienten aufweist, als das Material der profilierten supraleitenden Drähte. Ggf. werden die Eigenschaften des Materials des Außentubus auf die Eigenschaften des supraleitenden Materials abgestimmt, um sicherzustellen, dass die Form und die Beständigkeit des zentralen Kühlkanals erhalten bleibt. Ein weiteres entscheidendes Materialauswahlkriterium für den Außentubus ist ein hoher elektrischer Widerstand gegen Wirbelströme bei ausreichend hoher mechanischer Festigkeit.

Verfahren zur Herstellung eines supraleitenden Hohlkabels können mehrere Verfahrensschritte in unterschiedlicher Reihenfolge aufweisen. Ferner ist das Verfahren zur Herstellung eines erfindungsgemäßen supraleitenden Hohlkabels auch von den Möglichkeiten abhängig, profilierte supraleitende Drähte herzustellen.

Eines der erfindungsgemäßen Verfahren zur Herstellung eines supraleitenden Hohlkabels weist die nachfolgenden Verfahrensschritte auf. Zunächst wird ein kompakter Außentubus mit einem kreisförmigen Innenquerschnitt und mit einer zylindrischen, möglichst glatten, Innenwand hergestellt. Daneben werden profilierte supraleitende Drähte mit einem Querschnittsprofil eines Schlusssteines, bzw. Keystones, wie er für römische Steinbrücken oder für Kreuzgewölbe bekannt ist, hergestellt. Dazu weist das Querschnittsprofil der profilierten supraleitenden Drähte einen äußeren Krümmungsabschnitt auf, der dem kreisförmigen Innenquerschnitt des Außentubus angepasst ist. Ferner weist das Querschnittprofil einen inneren Krümmungsabschnitt auf, der dem kreisförmigen Querschnitt des Kühlkanals angepasst ist. Schließlich weist das Querschnittprofil Seitenkanten auf, die profiliert auf den Mittelpunkt eines zu bildenden Kühlkanals ausgerichtet sind.

Nachdem diese beiden Hauptkomponenten des erfindungsgemäßen Hohlkabels hergestellt sind, werden zunächst die profilierten supraleitenden Drähte zu einem lang gestreckten kreisrunden Bündel um einen zentralen Kühlkanal herum zusammengefügt. Bei diesem Zusammenfügen können auch Hilfsmittel, wie adhesive Stoffe, eingesetzt werden, um eine stoffschlüssige Verbindung zwischen den profilierten supraleitenden Drähte zu gewährleisten. Dann wird dieses kreisrunde Bündel aus profilierten supraleitenden Drähten in den kompakten Außentubus des supraleitenden Hohlkabels eingezogen. Dieses Verfahren hat den Vorteil, dass das Hohlkabel aus zwei voneinander unabhängig herstellbaren Komponenten zusammengebaut werden kann.

In einer weiteren Verfahrensvariante wird der Außentubus nicht als kompakte Komponente hergestellt, sondern in zwei Halbschalen gefertigt. Beim Zusammenbau des supraleitenden Hohlkabels werden dann die hergestellten profilierten supraleitenden Drähte in die Halbschalen eingelegt. Anschließend werden die Halbschalen mit innen liegenden profilierten Supraleitungen zusammengefügt und miteinander verschweißt. Dieses Verfahren hat den Vorteil, dass nach dem Schweißprozess eine Kontraktion des Außentubus auftreten kann, die gleichzeitig ein verdichtendes Zusammenpressen der innen liegenden profilierten supraleitenden Drähte bewirkt.

Bei einer weiteren Verfahrensvariante werden um ein Bündel aus profilierten supraleitenden Drähten Spanndrähte schraubenförmig gewickelt, vorzugsweise entgegen der Verdrillungsrichtung der supraleitenden Drähte. Anschließend wird eine elektrisch isolierende und hermetisch abdichtende Außenschicht auf die Spanndrähte aufgebracht. Diese Verfahrensvariante hat den Vorteil, dass unbegrenzt lange supraleitende Hohlkabel mit profilierten supraleitenden Drähten kontinuierlich herstellbar sind.

Eine weitere Verfahrensvariante sieht die Möglichkeit vor, den Außentubus als kompakte Komponente zu erhitzen und ein Bündel aus profilierten supraleitenden Drähten mit zentralem Kühlkanal zu kühlen. Anschließend werden die beiden Komponenten ineinander geschoben. Danach schrumpft der Außentubus auf das kreisrunde Bündel aus lang gestreckten profilierten supraleitenden Drähten auf und bewirkt ein Aufeinanderpressen der supraleitenden Drähte unter Bildung eines zentralen Kühlkanals. Dieses Verfahren hat den Vorteil, dass das Einziehen des kreisrunden Bündels aus supraleitenden Drähten mit zentralem Kühlkanal in den kompakten Außentubus erleichtert wird. Dabei ist es auch möglich, nur den massiven Außentubus zu erhitzen oder nur das Bündel aus profilierten supraleitenden Drähten zu kühlen.

Ein bevorzugtes Verfahren zum Herstellen von profilierten supraleitenden Drähten weist die nachfolgenden Verfahrensschritte auf. Zunächst werden im Standardverfahren supraleitende Multifilamentdrähte mit rundem Querschnitt hergestellt, die entsprechend der beabsichtigten Einsatzbedingungen eine optimale Mikrostruktur, ggf. mit zusätzlichen resistiven Barrieren beinhalten. Anschließend wird der runde supraleitende Draht zu profilierten supraleitenden Drähte profiliert. Dieses Profilieren kann auf unterschiedlichste Weise durchgeführt werden.

Einerseits ist es möglich, entsprechende Profilwalzen einzusetzen, die den inneren Krümmungsabschnitt und den äußeren Krümmungsabschnitt, sowie die Schlusssteinform der Seitenflächen realisieren. Ferner ist es möglich, für die Seitenkanten auch Profilwalzen einzusetzen, um einen Versatz in den Seitenkanten vorzusehen, sodass die profilierten supraleitenden Drähte beim Zusammenbau zu einem Bündel mit zentralem Kühlkanal stärker ineinander greifen. Anstelle von Profilwalzen ist es auch möglich, dass ein Profilziehen durch einen entsprechenden Profilstein vorgesehen wird, durch den der vorbereitete Draht gezogen und dabei im Querschnittsprofil verformt wird. Eine weitere Möglichkeit besteht in einem sogenannten Umformschmieden, bei dem das gewünschte Profil durch entsprechende Schmiedevorgänge erzeugt wird.

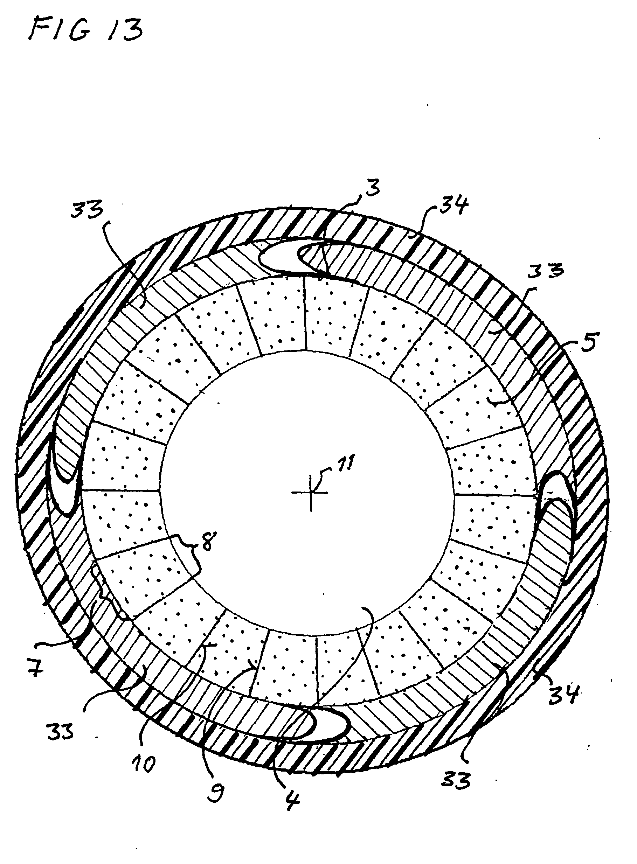

Anstelle eines massiven Außentubus kann das Ummanteln der profilierten supraleitendes Drähte auch mit schraubenförmig gewikkeltem Spanndraht, z.B. aus NiCr, erfolgen, Figur 13: Die elektrisch isolierende, hermetisch dichte Außenschicht wird anschließend hergestellt z.B. durch Polymerisation.

Gemäß einer Ausführungsform betrifft die Erfindung also ein supraleitendes Hohlkabel, das folgende Merkmale aufweist:

- einen Außentubus (2) mit einem kreisförmigen Innenquerschnitt und zylindrischer Innenwand (3);
- einen zentralen Kühlkanal (4) mit einem polygonalen oder kreisförmigem Querschnitt, der kleiner ist als der Innenquerschnitt des Außentubus (2), wobei zwischen Innenwand (3) und Kühlkanal (4) profilierte supraleitende Drähte (5) angeordnet sind;
- profilierte supraleitende Drähte (5), die mindestens ein supraleitendes Filament (6) aufweisen und die ein Querschnittsprofil eines Schlusssteines bzw. Keystones wie er für römische Steinbrücken oder für Kreuzgewölbe bekannt ist, besitzen, wobei

das Querschnittprofil der profilierten supraleitenden Drähte (5) einen äußeren Krümmungsabschnitt (7) aufweist, der dem polygonalen oder kreisförmigen Innenquerschnitt des Außentubus (2) angepasst ist und einen inneren Krümmungsabschnitt (8) aufweist, der dem kreisförmigen Querschnitt des Kühlkanals (4) angepasst ist, und das Querschnittprofil Seitenkanten (9, 10) aufweist, die profiliert auf den Mittelpunkt (11) des Kühlkanals (4) ausgerichtet sind, wobei die profilierten supraleitenden Drähte (5) auf der Innenwand (3) des Außentubus (2) angeordnet sind, und die profilierten supraleitende Drähte (5) mit ihren inneren Abschnitten (8) den Kühlkanal (4) des supraleitenden Hohlkabels (1) bilden.

Das supraleitende Hohlkabel kann dadurch gekennzeichnet sein, dass die profilierten supraleitenden Drähte (5) derart dicht auf der Innenwand (3) des Außentubus (2) des supraleitenden Hohlkabels (1) mit ihren äußeren Krümmungsabschnitten (7) und ihren radial ausgerichteten Seitenkanten (9, 10) aneinander stoßend angeordnet sind, dass sie bei allen Betriebstemperaturen des supraleitenden Hohlkabels (1) einen zentralen Kühlkanal (4) mit ihren inneren Krümmungsabschnitten (8) aufrecht erhalten.

Dieses supraleitende Hohlkabel kann dadurch gekennzeichnet sein, dass die Summe von Spaltbreiten (s) möglicher Radialspaltbildungen zwischen den profilierten supraleitenden Drähten (5) bei allen Betriebstemperaturen des supraleitenden Hohlkabels (1) kleiner ist als die Längendifferenz ($\Delta l$) zwischen dem äußeren (7) und dem inneren Krümmungsabschnitt (8) eines einzelnen profilierten supraleitenden Drahts.

Ferner kann das supraleitende Hohlkabel dadurch gekennzeichnet sein, dass die profilierten supraleitende Drähte (5) ineinander greifende profilierte Seitenkanten (12, 13) aufweisen.

Ferner kann das supraleitende Hohlkabel dadurch gekennzeichnet, dass die profilierten supraleitenden Drähte (5) spezielle Oberflächenbeschichtungen oder partielle hochresistive Ummantelungen aufweisen, um Wirbelstromeffekte und thermische Verluste zu vermindern.

Ferner kann das supraleitende Hohlkabel dadurch gekennzeichnet sein, dass die profilierten supraleitenden Drähte (5) um den zentralen Kühlkanal verdrillt sind.

Ferner kann das supraleitende Hohlkabel dadurch gekennzeichnet sein, dass die profilierten supraleitenden Drähte (5) keramische Supraleiter oder Hochtemperatursupraleiter aufweisen.

Ferner kann das supraleitendes Hohlkabel dadurch gekennzeichnet sein, dass der Außentubus (2) eine kreisförmige, quadratische oder trapezförmige Außenkontur (17) aufweist.

Ferner kann das supraleitende Hohlkabel dadurch gekennzeichnet sein, dass der Außentubus (2) in seiner Längsrichtung Kühlkanäle (18) aufweist.

Ferner kann das supraleitende Hohlkabel dadurch gekennzeichnet sein, dass der thermische Ausdehnungskoeffizient des Materials eines kompakten Außentubus (2) größer ist, als der thermische Ausdehnungskoeffizient der profilierten Supraleitungen (5).

Gemäß einer weiteren Ausführungsform betrifft die Erfindung auch ein Verfahren zur Herstellung eines supraleitenden Hohlkabels (1), das folgende Verfahrensschritte aufweist:

- Herstellen eines Außentubus (2) mit einem kreisförmigen Innenquerschnitt und zylindrischer Innenwand (3);
- Herstellen profilierter supraleitender Drähte (5) mit einem Querschnittsprofil eines Schlusssteines bzw. Keystones wie er für römische Steinbrücken oder für Kreuzgewölbe bekannt ist, wobei das Querschnittsprofil der profilierten supraleitenden Drähte (5) einen äußeren Krümmungsabschnitt (7) aufweist, der dem kreisförmigen Innenquerschnitt des Außentubus (2) angepasst ist und einen inneren Abschnitt (8) aufweist, der dem polygonale oder kreisförmigen Querschnitt eines zentralen Kühlkanals (4) angepasst ist und wobei das Querschnittprofil Seitenkanten (9, 10) aufweist, die profiliert auf den Mittelpunkt (11) eines zu bildenden Kühlkanals (4) ausgerichtet sind;
- Zusammenfügen der profilierten supraleitenden Drähte (5) zu einem lang gestreckten kreisrunden Bündel (28) um einen zentralen Kühlkanal (4) herum;
- Einziehen des kreisrunden Bündels (28) mit zentralem Kühlkanal (4) in den Außentubus (2).

Gemäß einer weiteren Ausführungsform betrifft die Erfindung auch ein Verfahren zur Herstellung eines supraleitenden Hohlkabels (1), das folgende Verfahrensschritte aufweist:

- Herstellen profilierter supraleitender Drähte (5) mit einem Querschnittsprofil eines Schlusssteines bzw. Keystones wie er für römische Steinbrücken oder für Kreuzgewölbe bekannt ist, wobei das Querschnittsprofil der profilierten supraleitenden Drähte (5) einen äußeren Krümmungsabschnitt (7) aufweist, der dem kreisförmigen Innenquerschnitt des Außentubus (2) angepasst ist und einen inneren Abschnitt (8) aufweist, der dem polygonale oder kreisförmigen Querschnitt eines zentralen Kühlkanals (4) angepasst ist und wobei das Querschnittprofil Seitenkanten (9, 10) aufweist, die profiliert auf den Mittelpunkt (11) eines zu bildenden Kühlkanals (4) ausgerichtet sind;
- Zusammenfügen der profilierten supraleitenden Drähte (5) zu einem lang gestreckten kreisrunden Bündel (28) um einen zentralen Kühlkanal (4) herum;
- schraubenförmiges Umwickeln des Bündels mit mindestens einem Spanndraht,
- Abdecken des umwickelten Spanndrahts mit einer elektrisch isolierenden und hermetisch abdichtenden Außenschicht des supraleitenden Hohlkabels.

Gemäß einer weiteren Ausführungsform betrifft die Erfindung auch ein Verfahren zur Herstellung eines supraleitenden Hohlkabels (1), das folgende Verfahrensschritte aufweist:

- Herstellen von zwei Halbschalen eines kompakten Außentubus (2) mit einem kreisförmigen Innenquerschnitt und zylindrischer Innenwand (3);
- Herstellen profilierter supraleitender Drähte (5) mit einem Querschnittsprofil eines Schlusssteines bzw. Keystones wie er für römische Steinbrücken oder für Kreuzgewölbe bekannt ist, wobei das Querschnittsprofil der profilierten supraleitenden Drähte (5) einen äußeren Krümmungsabschnitt (7) aufweist, der dem kreisförmigen Innenquerschnitt des Außentubus (2) angepasst ist und einen inneren Abschnitt (8) aufweist, der dem polygonale oder kreisförmigen Querschnitt eines zentralen Kühlkanals (4) angepasst ist und wobei das Querschnittprofil Seitenkanten (9, 10) aufweist, die profiliert auf den Mittelpunkt (11) eines zu bildenden Kühlkanals (4) ausgerichtet sind;
- Zusammenfügen der profilierten supraleitenden Drähte (5) zu einem lang gestreckten kreisrunden Bündel (28) um einen zentralen Kühlkanal (4) herum;
- Zusammenfügen der Halbschalen mit innen liegendem Bündel zu einem kompakten Außentubus des supraleitenden Hohlkabels.

Diese Verfahren zur Herstellung profilierter supraleitender Drähte für ein supraleitendes Hohlkabel können den folgenden Verfahrensschritt aufweisen:

- Profilieren der runden Standardform supraleitender Drähte (5).

Das Profilieren des Drahts kann mittels Profilwalzen erfolgen.

Ferner kann das Profilieren des Drahts durch einen Profilstein erfolgen.

Ferner kann das Profilieren des Drahts mittels Umformschmieden erfolgen.

Ferner kann ein zusätzliches, partielles Ummanteln der profilierten supraleitenden Drähte durch Metallbeschichten vorgesehen werden.

Die Erfindung wird nun anhand der beigefügten Figuren näher erläutert.

Figur 1    zeigt einen schematischen Querschnitt durch ein su- praleitendes Hohlkabel gemäß einer ersten Ausfüh- rungsform der Erfindung;

Figur 2    zeigt einen schematischen Querschnitt durch ein su- praleitendes Hohlkabel gemäß einer zweiten Ausfüh- rungsform der Erfindung;

Figur 3    zeigt einen schematischen Querschnitt durch ein De- tail des supraleitenden Hohlkabels gemäß Figur 2;

Figur 4    zeigt einen schematischen Querschnitt durch ein su- praleitendes Hohlkabel gemäß einer dritten Ausfüh- rungsform der Erfindung;

Figur 5    zeigt einen schematischen Querschnitt durch die Aus- gangsform eines supraleitenden Drahts vor einer Pro- filgebung;

Figur 6    zeigt einen schematischen Querschnitt durch einen profilierten supraleitenden Draht nach einer profi- lierenden Formgebung für ein supraleitendes Hohlkabel der ersten Ausführungsform der Erfindung gemäß Figur 1;

Figur 7    zeigt einen schematischen Querschnitt durch eine pro- filierten supraleitenden Draht nach einer profilie- renden Formgebung für ein supraleitendes Kabel der zweiten Ausführungsform der Erfindung gemäß Figur 2;

Figur 8    zeigt einen schematischen Querschnitt durch eine pro- filierte Supraleitung nach einer profilierenden Form- gebung für ein supraleitendes Hohlleiterkabel der dritten Ausführungsform der Erfindung;

Figur 9    zeigt einen schematischen Querschnitt durch ein su- praleitendes Hohlkabel gemäß einer vierten Ausfüh- rungsform der Erfindung;

Figur 10    zeigt den schematischen Querschnitt durch zwei Vari- anten eines supraleitendes Hohlkabel gemäß einer fünften Ausführungsform der Erfindung;

Figur 11    zeigt einen schematischen Querschnitt durch ein su- praleitendes Hohlkabel gemäß einer sechsten Ausfüh- rungsform der Erfindung;

Figur 12    zeigt einen schematischen Querschnitt durch ein su- praleitendes Hohlkabel gemäß einer siebten Ausfüh- rungsform der Erfindung;

Figur 13    zeigt einen schematischen Querschnitt durch ein su- praleitendes Hohlkabel gemäß einer achten Ausfüh- rungsform der Erfindung;

Figur 14    zeigt ein Foto als Figur 14a und eine schematischen Skizze als Figur 14 b eines supraleitendes Hohlkabel des CICC-Typs in Standardausführung

Figur 15    zeigt ein Foto als Figur 15 a und einen schematischen Querschnitt als Figur 15 b durch ein supraleitendes Hohlkabel des CICC-Typs gemäß dem Stand der Technik (POLO-Kabel).

Figur 16    zeigt ein Foto als Figur 16 a und eine schematische Skizze als Figur 16 b eines supraleitendes Kabels vom Nuklotron-Typ in Standardausfuehrung.

Figur 17    zeigt einen schematischen Querschnitt durch ein su- praleitendes Hohlkabel vom Nuklotron-Typ mit verbes- serter Konstruktion

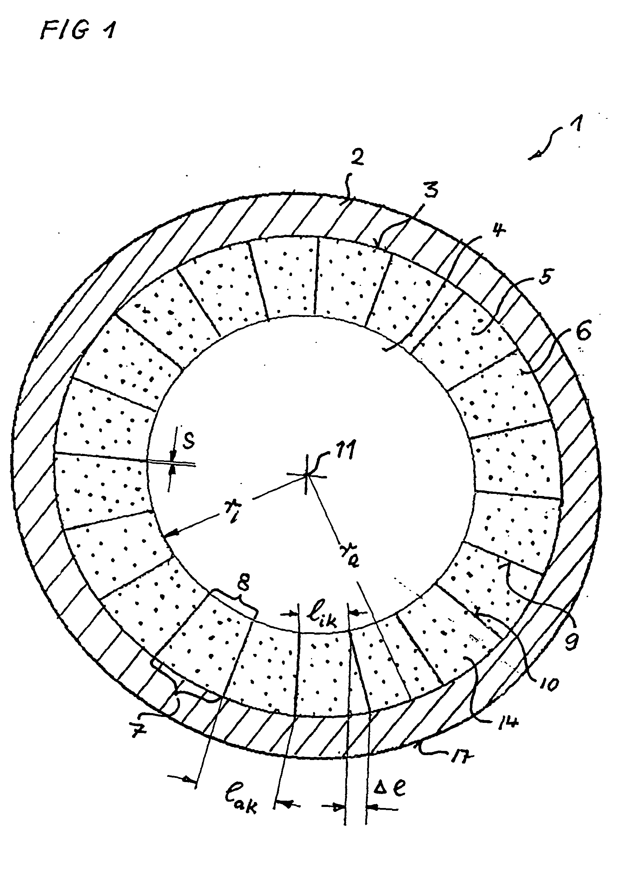

Figur 1 zeigt einen schematischen Querschnitt durch ein supraleitendes Hohlkabel 1 gemäß einer ersten Ausführungsform der Erfindung. Dieses Hohlkabel 1 weist einen zentralen Kühlkanal 4 auf, der von profilierten supraleitenden Drähten 5 umgeben wird, die in der Regel verdrillte Multifilamentdrähte sind. Diese profilierten supraleitenden Drähte 5 bilden in dem hier gezeigten Querschnitt einen Ring, der den zentralen Kühlkanal 4 unmittelbar umgibt, sodass diese profilierten supraleitenden Drähte intensiv durch den Kühlmittelstrom gekühlt werden können. Die profilierten supraleitenden Drähte 5 werden durch einen massiven Außentubus 2 zusammengehalten, der eine Innenwand 3 aufweist, an die sich die profilierten supraleitenden Drähte 5 eng anlehnen. Die profilierten supraleitenden Drähte 5 weisen einen Querschnitt auf, der einem Schlussstein einer römischen Brücke, bzw. eines gotischen Gewölbes, entspricht.

Dieses Profil weist einen äußeren Krümmungsabschnitt 7 auf, der an die Krümmung der Innenwand 3 des Außentubus 2 angepasst ist. Ferner weist der Querschnitt der profilierten supraleitenden Drähte 5 einen inneren Krümmungsabschnitt 8 auf, der an die Krümmung des zentralen Kühlkanals 4 angepasst ist. In dieser ersten Ausführungsform der Erfindung weisen die profilierten supraleitenden Drähte 5 glatte Seitenkanten 9 und 10 auf, die zum Mittelpunkt 11 des zentralen Kühlkanals 4 ausgerichtet sind. Die Spaltbreite s zwischen Seitenkanten benachbarter supraleitenden Drähte 5 darf nicht beliebig groß werden, da sonst die ringförmige Struktur der profilierten supraleitenden Drähte 5 und damit der Kühlkanal 4 beim Betrieb zerstört wird. Die Summe $n\cdot s$ aller Spaltbreiten s muss deshalb kleiner sein als die Längendifferenz $\Delta l$ der Krümmungslänge $l_{ak}$ des äußeren Krümmungsabschnitts 7 minus der Krümmungslänge $l_{ik}$ des inneren Krümmungsabschnitts 8 des Profils der profilierten supraleitenden Drähte 5.

Da in dieser ersten Ausführungsform der Erfindung zwanzig profilierte supraleitenden Drähte 5 vorgesehen sind, ist die tolerierbare Spaltbreite s zwischen den Seitenkanten benachbarter supraleitenden Drähte 5 äußerst begrenzt. Diese Begrenzung hängt nicht zuletzt auch von der Differenz zwischen inneren Radius $r_a$ des Außentubus 2 und dem Innenradius $r_i$ des Kühlkanals 4 ab, wie es in den obigen Formeln erläutert wird. Ein derartiges supraleitendes Hohlkabel 1 hat den Vorteil, dass der Strömungswiderstand innerhalb des Kühlkanals 4 äußerst gering ist und damit eine hohe Kühlrate sowie eine hohe mechanische Stabilität erzielt werden kann Ferner hat es den Vorteil, dass das Kühlmedium unmittelbar die profilierten supraleitenden Drähte 5 berührt und somit eine intensive Kühlung auch für kurze Wärmeimpulse gewährleistet ist. Schließlich hat dieses Hohlkabel den Vorteil, dass es im Wesentlichen nur aus zwei Lagen bzw. Komponenten aufgebaut ist: nämlich aus dem konzentrischen Bündel aus schlusssteinförmigen profilierten supraleitenden Drähten 5 und dem massiven Außentubus 2. Darüber hinaus kann zwecks (zusätzlicher) elektrischer Isolation dieses erfindungsgemäße supraleitende Hohlkabel 1 um die Außenkontur 17 des Außentubus 2 ein aufgewickeltes Kapton-Band aufweisen und, falls erforderlich, weitere elektroisolierende Schichten beispielsweise aus Glasfaserbändern haben. Dies gilt für alle Varianten entsprechend Fig. 1, 2, 4, 9, 10, 11 und 12.

Das Hohlkabel 1 der zweiten Ausführungsform unterscheidet sich von dem Hohlkabel 1 der ersten Ausführungsform durch die Profilierung der profilierten supraleitenden Drähte 5. Zusätzlich zu der Schlusssteinform weisen diese profilierten supraleitenden Drähte 5 einen Versatz der Größe v auf, der zusätzlich das Ineinandergreifen der profilierten supraleitenden Drähte 5 verbessert und größere Spaltbreiten s zwischen den benachbarten profilierten Seitenkanten 12 und 13 dieser profilierten supraleitenden Drähte 5 zulässt. Im Detail wurde der Zusammenhang zwischen der möglichen Spaltbreite s, sowie der Längendifferenz 1 zwischen äußeren und inneren Krümmungsabschnitten und der Größe v des Versatzes bereits oben erörtert.

Figur 3 zeigt einen schematischen Querschnitt durch ein Detail des supraleitenden Hohlkabels 1 gemäß Figur 2. Komponenten mit gleichen Funktionen wie in den vorgehenden Figuren werden mit gleichen Bezugszeichen gekennzeichnet und nicht extra erörtert. Figur 3 zeigt in größerem Maßstab das Ineinandergreifen der profilierten supraleitenden Drähte 5 durch den Versatz 19,benachbarter profilierter Seitenkanten 12 und 13.

Figur 4 zeigt einen schematischen Querschnitt durch ein supraleitendes Hohlkabel 1 gemäß einer dritten Ausführungsform der Erfindung. Diese dritte Ausführungsform der Erfindung unterscheidet sich von den vorhergehenden Ausführungsformen dadurch, dass die Anzahl der profilierten supraleitenden Drähte 5 von zwanzig in den Figuren 1 und 2 auf zehn in der Figur 4 reduziert wurde. Das Ineinandergreifen der profilierten supraleitenden Drähte 5 wird dadurch verstärkt, dass die supraleitenden Drähte 5 auf ihren profilierten Seitenkanten 12 und 13 Spitzenprofile 20 aufweisen. Diese Spitzenprofile 20 bilden einen Versatz der Größe v, der im Zusammenwirken mit der Längendifferenz $\Delta l$ zwischen den äußeren und inneren Krümmungsabschnitten 7 und 8 der Querschnitte der profilierten supraleitenden Drähte 5 die Toleranz für die Spaltbreite s vergrößert, sodass eine höhere

Toleranz gegenüber sich bildenden Spaltbreiten s zugelassen werden kann, ohne dass die Struktur der im Inneren des Außentubus 2 angeordneten supraleitenden Drähte 5 zusammenbricht.

Figur 5 zeigt einen schematischen Querschnitt durch einen supraleitenden Multifilament-Draht in Standardausführung. Derartige Drähte weisen einen kreisrunden Querschnitt auf und beinhalten wie oben beschrieben verdrillte supraleitende Filamente in einer mehr oder weniger komplexen Cu-Matrix.

Figur 6 zeigt einen schematischen Querschnitt durch einen profilierten supraleitenden Drähten 5 nach einer profilierenden Formgebung für ein supraleitendes Hohlkabel 1 der ersten Ausführungsform der Erfindung gemäß Figur 1. Bei dieser Formgebung wird ein Draht gemäß Figur 5 mit unterschiedlichen Walzenprofilen gewalzt, sodass einerseits ein äußerer Krümmungsabschnitt 7 entsteht und andererseits ein innerer Krümmungsabschnitt 8. Ferner werden die Seitenkanten 9 und 10 durch entsprechend winklig zueinander eingestellte Walzen gewalzt. Anstelle eines Walzenwerks kann auch ein Strangziehen durch einen entsprechenden formgebenden Ziehschuh eingesetzt werden. Bei diesem Verfahren wird der in Figur 5 gezeigte runde Draht in einen profilierten supraleitenden Draht 5 mit einem durch den Ziehschuh vorgegebenen Querschnitt umgeformt.

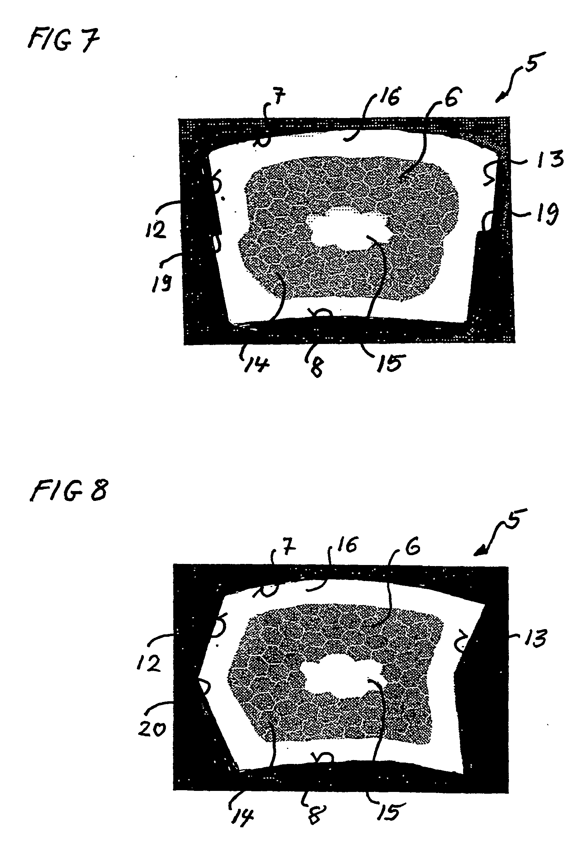

Figur 7 zeigt einen schematischen Querschnitt durch einen profilierten supraleitenden Draht 5 nach einer profilierenden Formgebung für ein supraleitendes Hohlkabel 1 der zweiten Ausführungsform der Erfindung gemäß Figur 2. Anstelle von glatten Seitenkanten, wie sie noch in Figur 6 gezeigt werden, werden bei dieser Profilierung profilierte Seitenkanten 12 und 13 geformt, bzw. durch einen Ziehstein gezogen. Dabei entstehen Stufenabsätze 19, die ein Ineinandergreifen der profilierten supraleitenden Drähte 5 beim Zusammenbau des Hohlkabels ermöglichen.

Figur 8 zeigt einen schematischen Querschnitt durch einen profilierten supraleitenden Draht 5 nach einer profilierenden Formgebung für ein supraleitendes Hohlkabel 1 der dritten Ausführungsform der Erfindung gemäß Figur 4. Auch dieses Profil mit einem Profilspitze 20 auf der Seitenkante 12 kann durch entsprechende Formgebung eines zunächst kreisrunden Querschnitts, wie es die Figur 5 zeigt, gewonnen werden. Dazu können entweder vier unterschiedlich formende Profilwalzen oder eine entsprechend geformte Ziehdüse eingesetzt werden, um die vier Profilkanten des Querschnitts der profilierten supraleitenden Drähte 5 herzustellen. Ein Vorteil dieser profilierten supraleitenden Drähte 5 der Figur 8 gegenüber Figur 7 ist es, dass eine derartiges Spitzenprofil Auswölbung 20 der profilierten Seitenkante 12 leichter durch Profilwalzen zu realisieren ist, als dass für das Profil mit einem Stufenabsatz 19 der Figur 7 möglich ist, und dass das Ineinandergreifen dieser Formen zur Selbstausrichtung der profilierten supraleitenden Drähte um den Kühlkanal beiträgt.

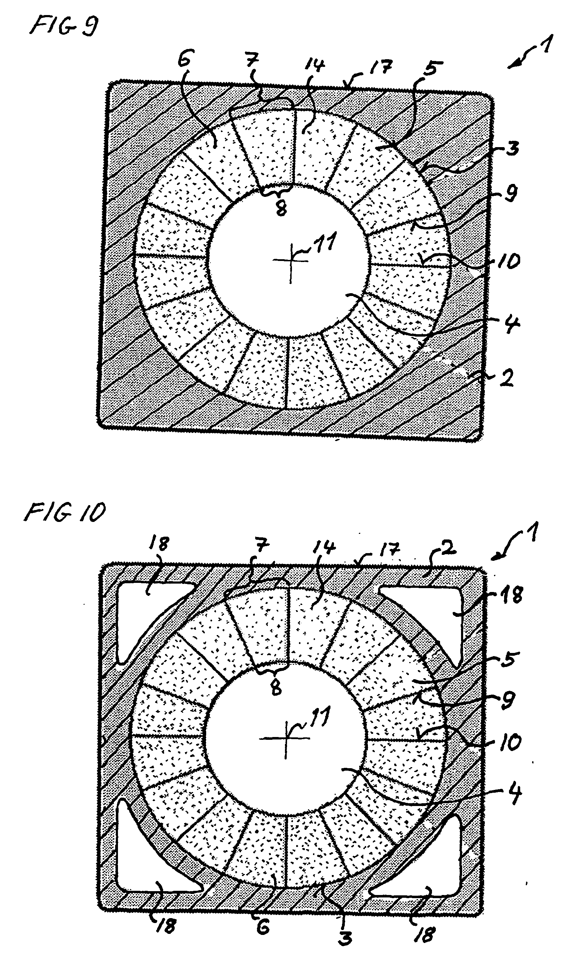

Figur 9 zeigt einen schematischen Querschnitt durch ein supraleitendes Hohlleiterkabel 1 gemäß einer vierten Ausführungsform der Erfindung. Komponenten mit gleichen Funktionen wie in den vorgehenden Figuren werden mit gleichen Bezugszeichen gekennzeichnet und nicht extra erörtert. Der Unterschied zu den vorhergehenden Ausführungsformen besteht darin, dass als massiver Außentubus 2 ein Außentubus gewählt wird, der zwar eine zylindrische Innenwand 3 aufweist, jedoch eine quadratische Außenkontur 17 besitzt, wodurch einerseits die Festigkeit des Außentubus 2 erhöht und andererseits die Herstellung kompakter Spulen wesentlich vereinfacht werden kann.

Figur 10 zeigt schematische Querschnitte durch zwei Varianten eines supraleitendes Hohlleiterkabel 1 gemäß einer fünften Ausführungsform der Erfindung. Komponenten mit gleichen Funktionen wie in den vorgehenden Figuren werden mit gleichen Bezugszeichen gekennzeichnet und nicht extra erörtert. Der Unterschied dieser fünften Ausführungsform der Erfindung unterscheidet sich von den vorhergehenden Ausführungsformen dadurch, dass der Außentubus 2 mit quadratischer Außenkontur 17 in den Ecken des quadratischen Außentubus 2 zusätzliche Kühlkanäle 18 in Längsrichtung des Hohlkabels 1 aufweist. Damit kann die Kühlwirkung, wie bereits oben beschrieben, für dieses Hohlkabel 1 weiter intensiviert werden.

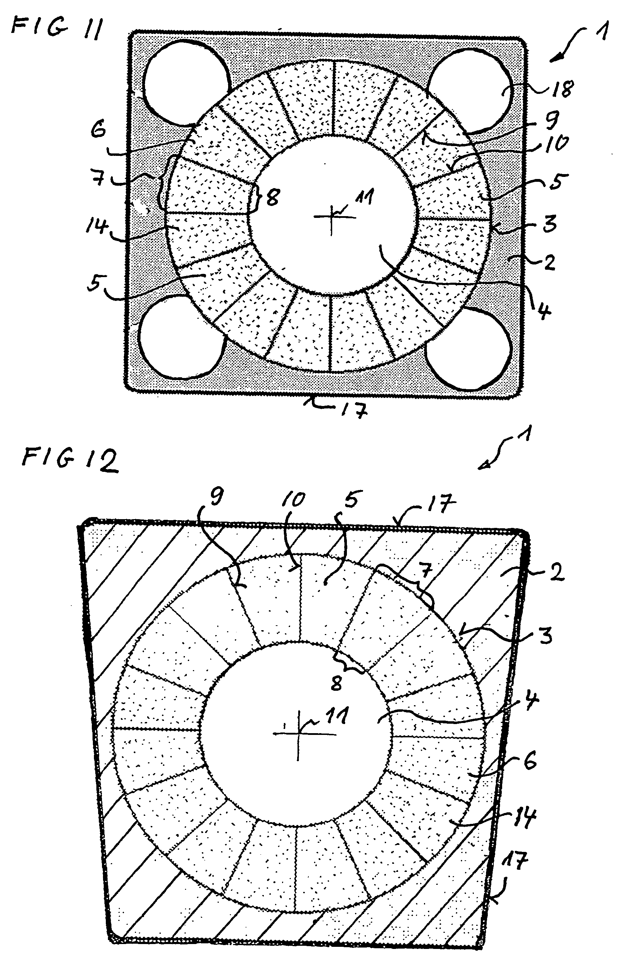

Figur 11 zeigt einen schematischen Querschnitt durch ein supraleitendes Hohlleiterkabel 1 gemäß einer sechsten Ausführungsform der Erfindung. Wobei das Bezugszeichen 5 profilierte supraleitende Drähte, das Bezugszeichen 2 den Außentubus, und das Bezugszeichen 18 Kühlkanäle im Außentubus 2 in seiner Längserstreckung kennzeichnet. Durch diese äußere Kühlkanäle 18, die sich längs der Innenwand des Außentubus erstrecken und zu dem Bündel aus profilierten supraleitenden Drähten eine Öffnung aufweisen, die schmaler als ein äußerer Krümmungsabschnitt des Profils der Drähte ist, werden die verdrillten profilierten supraleitenden Drähte somit nach jeder Vierteldrehung des Schraubenversatzes zusätzlich im direkten Kontakt mit dem Kühlmittel von außen gekühlt. Auch in dieser Variante befinden sich alle Drähte in absolut identischen elektromagnetischen, mechanischen und thermischen Bedingungen.

Figur 12 zeigt einen schematischen Querschnitt durch ein supraleitendes Hohlleiterkabel 1 gemäß einer siebten Ausführungsform der Erfindung. Die siebte Ausführungsform der Erfindung unterscheidet sich von den vorhergehenden Ausführungsformen dadurch, dass der Außentubus 2 eine trapezförmige Außenkontur 17 aufweist. Diese trapezförmige Außenkontur 17 kann dann von Vorteil sein, wenn mehrere dieser supraleitenden Hohlkabel 1 zu einer kreisförmigen Spule zusammengebaut oder spezielle Spulengeometrien mechanisch kompakt und möglichst stabil gefertigt werden sollen.

Figur 13 zeigt einen schematischen Querschnitt durch ein supraleitendes Hohlkabel 1 gemäß einer achten Ausführungsform der Erfindung. Komponenten mit gleichen Funktionen wie in den vorhergehenden Figuren werden mit gleichen Bezugszeichen gekennzeichnet, und nicht extra erörtert. Der Außentubus wird hier aus zwei Lagen gebildet, einer ersten Lage mit einem schraubenförmig gewickelter Spanndraht 33, z.B. aus NiCr und einer elektrisch isolierenden, hermetisch dichtenden Außenschicht 34, z.B. hergestellt durch Polymerisation. Wie bereits oben beschrieben, unterscheidet sich diese achte Ausführungsform der Erfindung von den vorhergehenden Ausführungsformen dadurch, dass anstelle eines massiven Außentubus das Ummanteln der profilierten supraleitende Drähte mit schraubenförmig gewickeltem Spanndraht erfolgt, worauf anschließend eine elektrisch isolierende, hermetisch dichte Außenschicht aufgebracht wird.

Figur 14 zeigt ein Foto als Figur 14a und eine schematischen Skizze als Figur 14 b eines supraleitendes Hohlkabel des CICC-Typs in Standardausführung. Komponenten mit gleichen Funktionen wie in den vorhergehenden Figuren werden mit gleichen Bezugszeichen gekennzeichnet, und nicht extra erörtert. Figur 14 zeigt ein Bündel verdrillter supraleitender Drähte 30, dass innerhalb eines hermetisch dichten Tubus 32 verläuft.

Figur 15 zeigt ein Foto als Figur 15 a und einen schematischen Querschnitt als Figur 15 b durch ein supraleitendes Hohlkabel des CICC-Typs gemäß dem Stand der Technik (POLO-Kabel). Komponenten mit gleichen Funktionen wie in den vorhergehenden Figuren werden mit gleichen Bezugszeichen gekennzeichnet, und nicht extra erörtert. In diesem Fall sind supraleitende Drähte 30 auf einem massiven Innentubus 21 als inneres Stützrohr angeordnet wobei der innere Kühlkanal für einen zweiphasigen Heliumstrom vorgesehen ist und superkritisches Helium direkt zwischen den supraleitenden Drähten 30 bei hohem Strömungswiderstand geführt werden kann..

Figur 16.zeigt ein Foto als Figur 16 a und eine schematische Skizze als Figur 16 b eines supraleitendes Kabels vom Nuklotron-Typ in Standardausführung. Komponenten mit gleichen Funktionen wie in den vorhergehenden Figuren werden mit gleichen Bezugszeichen gekennzeichnet, und nicht extra erörtert. Figur 16 zeigt in einem zentralen Kühlkanal, der von einem kompakten Innentubus 21 aus CuNi gebildet wird, ein darin geführtes zweiphasiges Helium 35. Auf dem Innentubus 21 sind supraleitende Drähte 30 gewickelt, die von einem NiCr-Spanndraht 33 zusammengehalten werden. Ein Kapton-Band 24 bildet eine elektrisch Isolierung und ein Glasfaserband 25 dient der Wärmeisolation des supraleitenden Hohlkabels.

Figur 17 zeigt einen schematischen Querschnitt durch ein supraleitendes Hohlkabel 1 vom Nuklotron-Typ mit verbesserter Konstruktion. Komponenten mit gleichen Funktionen wie in den vorhergehenden Figuren werden mit gleichen Bezugszeichen gekennzeichnet, und nicht extra erörtert. Figur 17 zeigt einen zentralen Kühlkanal 4, der von einem kompakten Innentubus 21 aus CuNi gebildet wird. Auf dem Innentubus 21 sind profilierte supraleitende Drähte 5 gewickelt, die von einem NiCr-Spanndraht 33 zusammengehalten werden. Eine elektrisch isolierende, hermetisch dichte Außenschicht 34 ist auf dem Spanndraht 33 angeordnet.

Bezugszeichenliste

| 1 | supraleitendes Hohlkabel |
| 2 | Außentubus |
| 3 | Innenwand des Außentubus |
| 4 | zentraler Kühlkanal |
| 5 | profilierter supraleitenden Draht |
| 6 | Supraleitendes Filament |
| 7 | äußerer Krümmungsabschnitt |
| 8 | innerer Krümmungsabschnitt |
| 9 | glatte Seitenkante |
| 10 | glatte Seitenkante |
| 11 | Mittelpunkt des Kühlkanals |
| 12 | profilierte Seitenkante |
| 13 | profilierte Seitenkante |
| 14 | supraleitendes Filament |
| 15 | metallischer Kern, bzw. Seele der stabilisierenden Matrix eines Supraleitenden Multifilamentleiters |
| 16 | Mantel der stabilisierenden Matrix eines Supraleitenden Multifilamentleiters einer profiliertes Drahts |
| 17 | Außenkontur des Außentubus |
| 18 | Kühlkanäle des Außentubus in Längsrichtung |
| 19 | Stufenabsatz (Stufenprofil) |
| 20 | Spitzenprofil einer Seitenkante |
| 21 | kompakter Innentubus |
| 24 | Kapton-Band |
| 25 | Glasfaserband |
| 26 | Außenmantel des Innentubus |
| 27 | Innenwand des Innentubus |
| 28 | Bündel mit supraleitenden Filamenten |
| 29 | Draht aus einem Bündel mit supraleitenden Filamenten und stabilisierender Matrix |
| 30 | supraleitende Drähte |
| 31 | Bündel verdrillter supraleitender Drähte |
| 32 | hermetisch dichter Tubus |
| 33 | schraubenförmig gewickelter Spanndraht |
| 34 | elektrisch isolierende hermetisch dichtende Außenschicht |
| 35 | zweiphasiges Helium |

| $l_{ak}$ | Länge des äußeren Krümmungsabschnitts |
| $l_{ik}$ | Länge des inneren Krümmungsabschnitts |
| $\Delta l$ | Längendifferenz |
| $s$ | Spaltbreite |
| $v$ | Größe des Versatzes |
| $n$ | Anzahl der profilierten supraleitenden Drähte pro supraleitendem Hohlkabel |
| $r_a$ | Innenradius des Außentubus |
| $r_i$ | Radius des zentralen Kühlkanals |

**Patentansprüche**

1. Supraleitendes Hohlkabel (1), das folgende Merkmale aufweist:

   einen Außentubus (2) mit einem kreisförmigen Innenquerschnitt und zylindrischer Innenwand (3);
   einen zentralen Kühlkanal (4) mit einem polygonalen oder kreisförmigen Querschnitt, der kleiner als der Innenquerschnitt des Außentubus (2) ist;
   profilierte supraleitende Drähte (5), die zwischen Innenwand (3) und Kühlkanal (4) angeordnet sind und mindestens ein supraleitendes Filament (6) aufweisen und die ein Querschnittsprofil eines Schlusssteines bzw. Keystones besitzen, wie er für römische Steinbrücken oder für Kreuzgewölbe bekannt ist;
   wobei das Querschnittsprofil der profilierten supraleitenden Drähte (5) einen äußeren Krümmungsabschnitt (7) aufweist, der dem polygonalen oder kreisförmigen Innenquerschnitt des Außentubus (2) angepasst ist und das Querschnittsprofil der profilierten supraleitenden Drähte (5) Seitenkanten (9, 10) aufweist, die auf den Mittelpunkt (11) des Kühlkanals (4) ausgerichtet sind;
   **dadurch gekennzeichnet, dass**
   die profilierten supraleitenden Drähte (5) auf der Innenwand (3) des Außentubus (2) angeordnet sind;
   das Querschnittsprofil der profilierten supraleitenden Drähte (5) einen inneren Krümmungsabschnitt (8) aufweist, der dem kreisförmigen Querschnitt des Kühlkanals (4) angepasst ist;
   die profilierten supraleitende Drähte (5) mit ihren inneren Krümmungsabschnitten (8) den zylindrischen Kühlkanal (4) des supraleitenden Hohlkabels (1) bilden, wobei sie mit ihren radial ausgerichteten Seitenkanten (9, 10) derart dicht aneinander und mit ihren äußeren Krümmungsabschnitten (7) derart dicht auf der Innenwand des Außentubus (2) angeordnet sind, daß sie sich form- und kraftschlüssig in Position halten können und den Kühlkanal (4) bei allen Betriebstemperaturen des supraleitenden Hohlkabels (1) aufrechterhalten.

2. Supraleitendes Hohlkabel nach Anspruch 1,

**dadurch gekennzeichnet, dass**
die Summe von Spaltbreiten (s) möglicher Radialspaltbildungen zwischen den profilierten supraleitenden Drähten (5) bei allen Betriebstemperaturen des supraleitenden Hohlkabels (1) kleiner ist als die Längendifferenz ($\Delta$l) zwischen dem äußeren (7) und dem inneren Krümmungsabschnitt (8) eines einzelnen profilierten supraleitenden Drahts.

3. Supraleitendes Hohlkabel nach Anspruch 1,
**dadurch gekennzeichnet, dass**
die profilierten supraleitende Drähte (5) ineinander greifende profilierte Seitenkanten (12, 13) aufweisen.

4. Supraleitendes Hohlkabel nach Anspruch 1 oder 2,
**dadurch gekennzeichnet, dass**
die profilierten supraleitenden Drähte (5) spezielle Oberflächenbeschichtungen oder partielle hochresistive Ummantelungen aufweisen, um Wirbelstromeffekte und thermische Verluste zu vermindern.

5. Supraleitendes Hohlkabel nach einem der vorhergehenden Ansprüche,
**dadurch gekennzeichnet, dass**
die profilierten supraleitenden Drähte (5) um den zentralen Kühlkanal verdrillt sind.

6. Supraleitendes Hohlkabel nach einem der vorhergehenden Ansprüche,
**dadurch gekennzeichnet, dass**
die profilierten supraleitenden Drähte (5) keramische Supraleiter oder Hochtemperatursupraleiter aufweisen.

7. Supraleitendes Hohlkabel nach einem der vorhergehenden Ansprüche,
**dadurch gekennzeichnet, dass**
der Außentubus (2) eine kreisförmige, quadratische oder trapezförmige Außenkontur (17) aufweist.

8. Supraleitendes Hohlkabel nach einem der vorhergehenden Ansprüche,
**dadurch gekennzeichnet, dass**
der Außentubus (2) in seiner Längsrichtung Kühlkanäle (18) aufweist.

9. Supraleitendes Hohlkabel nach einem der vorhergehenden Ansprüche,
**dadurch gekennzeichnet, dass**
der thermische Ausdehnungskoeffizient des Materials eines kompakten Außentubus (2) größer ist als der thermische Ausdehnungskoeffizient der profilierten Supraleitungen (5).

10. Verfahren zur Herstellung eines supraleitenden Hohlkabels (1) gemäss Anspruch 1, das folgende Verfahrensschritte aufweist:

Herstellen profilierter supraleitender Drähte (5) mit einem Querschnittsprofil eines Schlusssteines, bzw. Keystones, wie er für römische Steinbrücken oder für Kreuzgewölbe bekannt ist, wobei das Querschnittsprofil der profilierten supraleitenden Drähte (5) einen äußeren Krümmungsabschnitt (7) und einen inneren Abschnitt (8) aufweist, der einem polygonalen oder kreisförmigen Querschnitt eines zentralen Kühlkanals (4) angepasst ist und wobei das Querschnittsprofil Seitenkanten (9, 10) aufweist, die auf den Mittelpunkt (11) eines durch die inneren Abschnitte (8) zu bildenden Kühlkanals (4) ausgerichtet sind;
Zusammenfügen der profilierten supraleitenden Drähte (5) zu einem lang gestreckten kreisrunden Bündel (28), wobei die Seitenkanten (9, 10) der benachbarten profilierten supraleitenden Drähte (5) aneinander liegen und mit ihren inneren Abschnitten (8) einen zentralen Kühlkanal (4) bilden;
und wahlweise:

Einziehen des kreisrunden Bündels (28) mit dem zentralen Kühlkanal (4) in einen Außentubus (2)
oder
Zusammenfügen von zwei Halbschalen eines kompakten Außentubus (2) mit einem kreisförmigen Innenquerschnitt und zylindrischer Innenwand (3) mit innen liegendem Bündel (28) zu einem kompakten Außentubus des supraleitenden Hohlkabels.

11. Verfahren nach Anspruch 10,
**dadurch gekennzeichnet, dass**
ein schraubenförmiges Umwickeln des Bündels (28) mit mindestens einem Spanndraht und Abdecken des umwickelten Spanndrahts mit einer elektrisch isolierenden und hermetisch abdichtenden Außenschicht des supraleitenden Hohlkabels vor dem Zusammenfügen der den Außentubus bildenden Halbschalen erfolgt.

12. Verfahren zur Herstellung profilierter supraleitender Drähte für ein supraleitendes Hohlkabel gemäß Anspruch 10 oder 11, das folgenden Verfahrensschritt aufweist:

Profilieren der runden Standardform supraleitender Drähte (5).

13. Verfahren nach Anspruch 12,
**dadurch gekennzeichnet, dass**
das Profilieren des Drahts mittels Profilwalzen erfolgt.

14. Verfahren nach Anspruch 12,

**dadurch gekennzeichnet, dass**
das Profilieren des Drahts durch einen Profilstein erfolgt.

15. Verfahren nach Anspruch 12,
**dadurch gekennzeichnet, dass**
das Profilieren des Drahts mittels Umformschmieden erfolgt.

16. Verfahren nach einem der Ansprüche 9 bis 13,
**dadurch gekennzeichnet, dass**
ein zusätzliches, partielles Ummanteln der profilierten supraleitenden Drähte durch Metallbeschichten erfolgt.

**Claims**

1. Superconducting hollow cable (1) having the following features:

    an outer tube (2) having a circular inner cross-section and a cylindrical inner wall (3);
    a central cooling channel (4) having a polygonal or circular cross-section which is smaller than the inner cross-section of the outer tube (2);
    profiled superconducting wires (5) which are arranged between the inner wall (3) and the cooling channel (4) and which comprise at least one superconducting filament (6) and which have a cross-sectional profile of a key stone as known for Roman stone bridges or for groin vaults, wherein
    the cross-sectional profile of the profiled superconducting wires (5) having an outer region (7) of curvature which is matched to the polygonal or circular inner cross-section of the outer tube (2), and the cross-sectional profile of the profiled superconducting wires (5) having side edges (9, 10) which are oriented towards the centre-point (11) of the cooling channel (4);
    **characterized in that** the profiled superconducting wires (5) are arranged on the inner wall (3) of the outer tube (2); the cross-sectional profile of the profiled superconducting wires (5) has an inner region (8) of curvature which is matched to the circular cross-section of the cooling channel (4);
    the profiled superconducting wires (5) form, by means of their inner regions (8) of curvature, the cylindrical cooling channel (4) of the superconducting hollow cable (1), said wires being arranged with their radially oriented side edges (9, 10) so tightly against one another and with their outer regions (7) of curvature so tightly on the inner wall of the outer tube (2) that they can hold themselves in position by means of a shape-based and force-based fit and maintain the cooling channel (4) at all operating temperatures of the superconducting hollow cable (1).

2. Superconducting hollow cable according to claim 1, **characterized in that** the sum of gap widths(s) of possible radial gap formations between the profiled superconducting wires (5) is, at all operating temperatures of the superconducting hollow cable (1), smaller than the difference in length ($\Delta$l) between the outer (7) and inner (8) regions of curvature of an individual profiled superconducting wire.

3. Superconducting hollow cable according to claim 1, **characterized in that** the profiled superconducting wires (5) have intermeshing profiled side edges (12, 13).

4. Superconducting hollow cable according to claim 1 or 2,
**characterized in that** the profiled superconducting wires (5) have special surface coatings or partial high-resistance jacketing means in order to reduce eddy current effects and thermal losses.

5. Superconducting hollow cable according to one of the preceding claims,
**characterized in that** the profiled superconducting wires (5) are twisted around the central cooling channel.

6. Superconducting hollow cable according to one of the preceding claims,
**characterized in that** the profiled superconducting wires (5) have ceramic superconductors or high-temperature superconductors.

7. Superconducting hollow cable according to one of the preceding claims,
**characterized in that** the outer tube (2) has a circular, square or trapezoidal external contour (17).

8. Superconducting hollow cable according to one of the preceding claims,
**characterized in that** the outer tube (2) comprises cooling channels (18) in its longitudinal direction.

9. Superconducting hollow cable according to one of the preceding claims,
**characterized in that** the coefficient of thermal expansion of the material of a compact outer tube (2) is greater than the coefficient of thermal expansion of the profiled superconductors (5).

10. Method of producing a superconducting hollow cable (1) according to claim 1, which comprises the following method steps:

    producing profiled superconducting wires (5) having a cross-sectional profile of a key stone as known for Roman stone bridges or for groin vaults, the cross-sectional profile of the profiled superconducting wires (5) having an outer region (7) of curvature and having an inner region (8) which is matched to the polygonal or circular cross-section of a central cooling channel (4), and the cross-sectional profile having side edges (9, 10) which are oriented towards the centre-point (11) of a cooling channel (4) to be formed by the inner regions (8);

bringing together the profiled superconducting wires (5) to form a longitudinally extended circular bundle (28), the side edges (9, 10) of the adjacent profiled superconducting wires (5) lying against one another and the inner regions (8) thereof forming a central cooling channel (4); and alternatively:

> drawing the circular bundle (28) having a central cooling channel (4) into the outer tube (2) or
>
> bringing together tow half-shells of a compact outer tube (2) having a circular inner cross-section and a cylindrical inner wall (3), with the bundle (28) lying inside, to form a compact outer tube of the superconducting hollow cable.

**11.** Method according to claim 10, **characterized in that** at least one tensioning wire is wound around the bundle (28) in a helical arrangement and the wound-around tensioning wire is covered with an electrically insulating and hermetically sealing outer layer of the superconducting hollow cable before bringing together the half-shells forming the outer tube.

**12.** Method of producing profiled superconducting wires for a superconducting hollow cable, according to claim 10 or 11, which comprises the following method step:

> profiling the round standard shape of superconducting wires (5).

**13.** Method according to claim 12, **characterized in that** profiling of the wire is accomplished by means of profile rollers.

**14.** Method according to claim 12, **characterized in that** profiling of the wire is accomplished by means of a profile block.

**15.** Method according to claim 12, **characterized in that** profiling of the wire is accomplished by means of reshapeing forging.

**16.** Method according to one of the claims 9 to 13, **characterized in that** an additional partial jacketing of the profiled superconducting wires is accomplished by means of metal coating.

## Revendications

**1.** Câble creux (1) supraconducteur, qui comporte les caractéristiques suivantes :

> - un tube extérieur (2) avec une section intérieure circulaire et une paroi intérieure (3) cylindrique ;
> - un conduit de refroidissement (4) central avec une section polygonale ou circulaire, qui est plus petite que la section intérieure du tube extérieur (2) ;
> - des fils (5) supraconducteurs profilés, qui sont disposés entre la paroi intérieure (3) et le conduit de refroidissement (4) et comportent au moins un filament (6) supraconducteur et qui ont une section avec un profil en clé de voûte ou keystone, tel qu'il est connu pour les ponts de pierre romains ou les voûtes d'ogives ;
> - le profil de la section des fils (5) supraconducteurs profilés ayant un segment courbe extérieur (7), qui est ajusté à la section intérieure polygonale ou circulaire du tube extérieur (2), et le profil de la section des fils (5) supraconducteurs profilés ayant des bords latéraux (9, 10), qui sont alignés sur le centre (11) du conduit de refroidissement (4) ;
> **caractérisé en ce que**
> - les fils (5) supraconducteurs profilés sont disposés sur la paroi intérieure (3) du tube extérieur (2) ;
> - le profil de la section des fils (5) supraconducteurs profilés ayant un segment courbe intérieur (8) qui est ajusté à la section circulaire du conduit de refroidissement (4) ;
> - les fils (5) supraconducteurs profilés forment avec leurs segments courbes intérieurs (8) le conduit de refroidissement (4) cylindrique du câble creux (1) supraconducteur , sachant qu'avec leurs bords latéraux (9, 10) orientés radialement, ils sont disposés étroitement les uns contre les autres et avec leurs segments courbes extérieurs (7), ils sont disposés étroitement contre la paroi intérieure du tube extérieur (2), de telle sorte que, par conjugaison de forme et par force, ils peuvent se maintenir en position et maintiennent le conduit de refroidissement (4) dans toutes les températures de service du câble creux (1) supraconducteur.

**2.** Câble creux supraconducteur selon la revendication 1, **caractérisé en ce que** la somme des largeur(s) des fentes radiales susceptibles de se former entre les fils (5) supraconducteurs profilés dans toutes les températures de service du câble creux (1) supraconducteur est inférieure à la différence de longueur (Δl) entre le segment courbe extérieur (8) et le segment courbe intérieur (7) d'un fil supraconducteur profilé individuel.

3. Câble creux supraconducteur selon la revendication 1, **caractérisé en ce que** les fils (5) supraconducteurs profilés comportent des bords latéraux (12, 13) engrenant les uns dans les autres.

4. Câble creux supraconducteur selon la revendication 1 ou 2, **caractérisé en ce que** les fils (5) supraconducteurs profilés comportent des revêtements de surface spéciaux ou des enveloppes partielles très résistantes pour diminuer les effets liés aux courants de Foucault et les pertes thermiques.

5. Câble creux supraconducteur selon l'une quelconque des revendications précédentes, **caractérisé en ce que** les fils (5) supraconducteurs profilés sont torsadés autour du conduit de refroidissement central.

6. Câble creux supraconducteur selon l'une quelconque des revendications précédentes, **caractérisé en ce que** les fils (5) supraconducteurs profilés comportent des supraconducteurs céramiques ou des supraconducteurs à haute température.

7. Câble creux supraconducteur selon l'une quelconque des revendications précédentes, **caractérisé en ce que** le tube extérieur (2) possède un contour extérieur (17) circulaire, carré ou trapézoïdal.

8. Câble creux supraconducteur selon l'une quelconque des revendications précédentes, **caractérisé en ce que** le tube extérieur (2) comporte des conduits de refroidissement (18) dans sa direction longitudinale.

9. Câble creux supraconducteur selon l'une quelconque des revendications précédentes, **caractérisé en ce que** le coefficient de dilatation thermique du matériau d'un tube extérieur (2) compact est supérieur au coefficient de dilatation thermique des supraconducteurs (5) profilés.

10. Procédé pour la fabrication d'un câble creux (1) supraconducteur selon la revendication 1, lequel comporte les étapes suivantes :

    - fabrication de fils (5) supraconducteurs profilés avec un profil de section en clé de voûte ou keystone, tel qu'il est connu pour les ponts de pierre romains ou les voûtes d'ogives, le profil de la section des fils (5) supraconducteurs profilés ayant un segment courbe extérieur (7) et un segment courbe intérieur (8), qui sont ajustés à une section polygonale ou circulaire d'un conduit de refroidissement (4) central, et le profil de la section ayant des bords latéraux (9, 10), qui sont alignés sur le centre (11) d'un conduit de refroidissement (4) à former par les segments intérieurs (8) ;
    - assemblage des fils (5) supraconducteurs profilés pour former un faisceau (28) rond allongé, sachant que les bords latéraux (9, 10) des fils (5) supraconducteurs profilés adjacents sont en appui les uns contre les autres et forment un conduit de refroidissement (4) central avec leurs segments intérieurs (8) ;
    et au choix :
    - insertion du faisceau (28) rond avec le conduit de refroidissement (4) central dans un tube extérieur (2)
    ou
    - assemblage de deux demi-coquilles d'un tube extérieur (2) compact avec une section intérieure circulaire et une paroi intérieure (3) cylindrique avec un faisceau (28) situé à l'intérieur pour former un tube extérieur compact du câble creux supraconducteur.

11. Procédé selon la revendication 10, **caractérisé en ce qu'**au moins un fil tendeur est enroulé en spirale autour du faisceau (28), et le fil tendeur enroulé est recouvert par une couche extérieure électro-isolante et hermétiquement étanche du câble creux supraconducteur avant l'assemblage des demi-coquilles formant le tube extérieur.

12. Procédé pour la fabrication de fils supraconducteurs profilés pour un câble creux supraconducteur selon la revendication 10 ou 11, comportant l'étape suivante :

    profilage de la forme standard ronde des fils (5) supraconducteurs profilés.

13. Procédé selon la revendication 12, **caractérisé en ce que** le profilage du fil est réalisé avec des cylindres de profilage.

14. Procédé selon la revendication 12, **caractérisé en ce que** le profilage du fil est réalisé avec un galet de profilage.

15. Procédé selon la revendication 12, **caractérisé en ce que** le profilage du fil est réalisé par formage par forgeage.

16. Procédé selon l'une quelconque des revendications 9 à 13, **caractérisé en ce que** les fils supraconducteurs profilés sont entourés d'une enveloppe partielle supplémentaire au moyen d'un revêtement métallique.

FIG 1

FIG 2

FIG 3

FIG 4

FIG 5

FIG 6

FIG 7

FIG 8

FIG 9

FIG 10

FIG 11

FIG 12

FIG 13

FIG 14a

FIG 14b

FIG 15 a

FIG 15 b

FIG 16a

35  4  21  30  33  24  25

FIG 16b

4  35  21  30  33  24  25

FIG 17

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 6675623 B2

- US 20030024730 A

### In der Beschreibung aufgeführte Nicht-Patentliteratur

- **H. Khodzhibagiyan.** Design and test of new hollow high current NbTi cable for fast ramped synchrotron magnets. *Proc. EUCAS 2003,* September 2003